# DEMANDE DE BREVET EUROPEEN

(11) **EP 1 354 727 A1**
(43) Date de publication de la demande: **22.10.2003**
(21) Numéro de dépôt: 03003146.2
(22) Date de dépôt: 18.02.2003
(51) Int. Cl.: B60C 23/04

(54) **Dispositif de communication entre un véhicule et une de ses roues**

(30) Priorité: 16.04.2002 FR 0204729
(71) Demandeur: Siemens VDO Automotive S.A.S., 31036 Toulouse Cédex 01 (FR)
(72) Inventeur: Luce, Dominique, 31000 Toulouse (FR)

(57) **Abrégé**

Le dispositif de communication entre un véhicule et une de ses roues comporte un boîtier (13) contenant un circuit électronique (18) et adapté à venir en appui sur une jante (21) de ladite roue lors du montage d'une valve (10) sur ladite jante.

Le boîtier comporte au moins une griffe (16, 17) reliée électriquement audit circuit électronique et adaptée à griffer la surface de la valve lors du montage de la valve sur ladite jante.

## Description

La présente invention vise un dispositif de communication entre un véhicule et une de ses roues. Elle s'applique, en particulier, à la communication d'informations relatives à la pression et/ou la température d'un pneumatique.

Un système de surveillance de pression de pneu (en anglais "Tire Pressure Monitoring System") comporte, portés par la roue du véhicule considérée, un capteur de pression et un émetteur de radio fréquences qui utilise la valve du pneu comme antenne émettrice. Les valves possèdent généralement, en surface, une couche isolante. Pour mettre en contact l'émetteur et la valve, il est connu de traiter, partiellement, la surface de la valve pour la rendre conductrice. Cette solution présente de nombreux inconvénients. Le traitement de la surface de la valve est coûteux et inadapté aux cas où il est nécessaire de laisser une liberté de mouvement angulaire relatif de l'émetteur par rapport à la valve.

La présente invention entend remédier à ces inconvénients.

A cet effet, la présente invention vise un dispositif de communication entre un véhicule et une de ses roues, comportant un boîtier contenant un circuit électronique et adapté à venir en appui sur une jante de ladite roue lors du montage d'une valve sur ladite jante, caractérisé en ce que ledit boîtier comporte au moins une griffe reliée électriquement audit circuit électronique et adaptée à griffer la surface de la valve lors du montage de la valve sur ladite jante.

Grâce à ces dispositions, la couche isolante de la valve est localement supprimée au point de contact de la griffe et de la jante, ce qui garantit une bonne conduction entre la valve et la griffe et, par conséquent, entre la valve et le circuit émetteur, sans qu'un usinage particulier de la valve ne soit nécessaire.

Selon des caractéristiques particulières, ledit boîtier comporte un couple de griffes positionnées de part et d'autre de la valve lors du montage de la valve sur la jante.

Grâce à ces dispositions, les jeux dans le positionnement de la valve et du boîtier n'empêchent pas les griffes de griffer la surface de la valve.

Selon des caractéristiques particulières, il est prévu une rotation relative de la valve et du boîtier et, à la fin du vissage de la valve, chaque griffe se trouve à proximité ou sur l'axe de rotation de ladite rotation relative. Grâce à ces dispositions, la griffe n'exerce pas ou peu de couple résistant au mouvement relatif de la valve et du boîtier.

Selon des caractéristiques particulières, au moins une griffe est en acier inoxydable ou en tout autre métal ayant une bonne conduction électrique et une dureté supérieure au matériau de la valve. Grâce à ces dispositions, la griffe est plus dure que la valve, généralement en aluminium.

Selon des caractéristiques particulières, au moins une griffe possède une ouverture adaptée à recueillir un copeau résultant de la griffure de la valve par ladite griffe. Grâce à ces dispositions, le copeau ne risque pas de causer de dégâts sur les circuits, le pneu et le capteur mis en oeuvre.

Selon des caractéristiques particulières, au moins une griffe présente une plus grande dimension parallèle au sens de déplacement relatif de la valve. Grâce à ces dispositions, la griffe ne peut être facilement déformée par la pression exercée par la valve.

Selon des caractéristiques particulières, au moins une griffe possède une forme sensiblement pyramidale. Grâce à ces dispositions, la griffe ne peut être facilement déformée par la force exercée par la valve sur sa pointe.

Selon des caractéristiques particulières, au moins une griffe possède une forme de deux demi pyramides à base triangulaires, de hauteurs différentes laissant une ouverture entre elles. Ladite griffe est ainsi bien adaptée à, d'une part, griffer la surface de la valve et, d'autre part, recueillir un éventuel copeau résultant de la griffure.

Selon des caractéristiques particulières, au moins une griffe est formée par emboutissage, l'action d'emboutissage provoquant une déchirure d'une partie de ladite griffe.

Grâce à ces dispositions, le bord de la déchirure peut servir à griffer la surface de la valve et, au cas où un copeau de griffure apparaîtrait, celui-ci serait récupéré dans le volume de la griffe.

Selon des caractéristiques particulières, le boîtier possède une forme adaptée à entourer, de manière sensiblement étanche à la circulation d'air, chaque griffe. Grâce à ces dispositions, l'oxydation de la zone de contact entre la griffe et la valve est limitée.

D'autres avantages, buts et caractéristiques de la présente invention ressortiront de la description qui va suivre, faite en regard des dessins annexés dans lesquels :
- la figure 1 représente une vue en coupe schématique d'un boîtier conforme à la présente invention et une valve avant montage sur une jante,
- la figure 2 représente la vue en coupe schématique de la figure 1 à la fin du montage sur une jante,
- la figure 3 représente, schématiquement, une griffe portée par une pièce de raccordement électrique entre la valve et un circuit électronique incorporé dans le boîtier illustré en figures 1 et 2, et
- les figures 4a et 4b représentent schématiquement deux vues en élévation (respectivement de face et de dos) de la pièce de raccordement portant la griffe schématiquement représentée en figure 3.

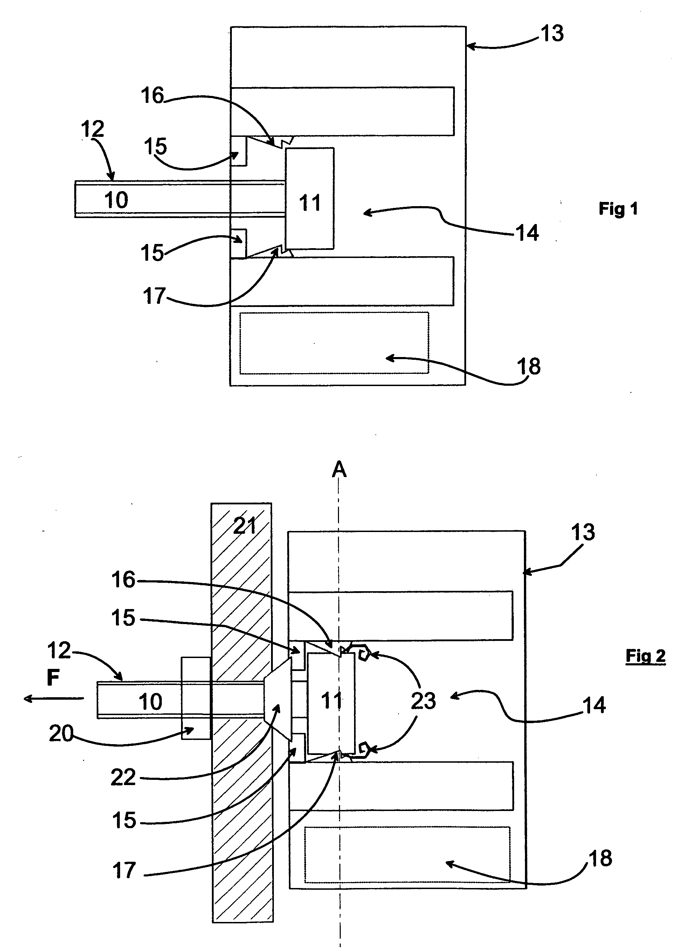

On observe, en figure 1, une valve 10, possédant une tête 11 à plusieurs pans et un filetage 12, un boîtier électronique 13 comportant une ouverture centrale 14 adaptée à la forme de la tête 11 de la valve 10, un fond 15 de l'ouverture centrale 14 et deux griffes 16 et 17.

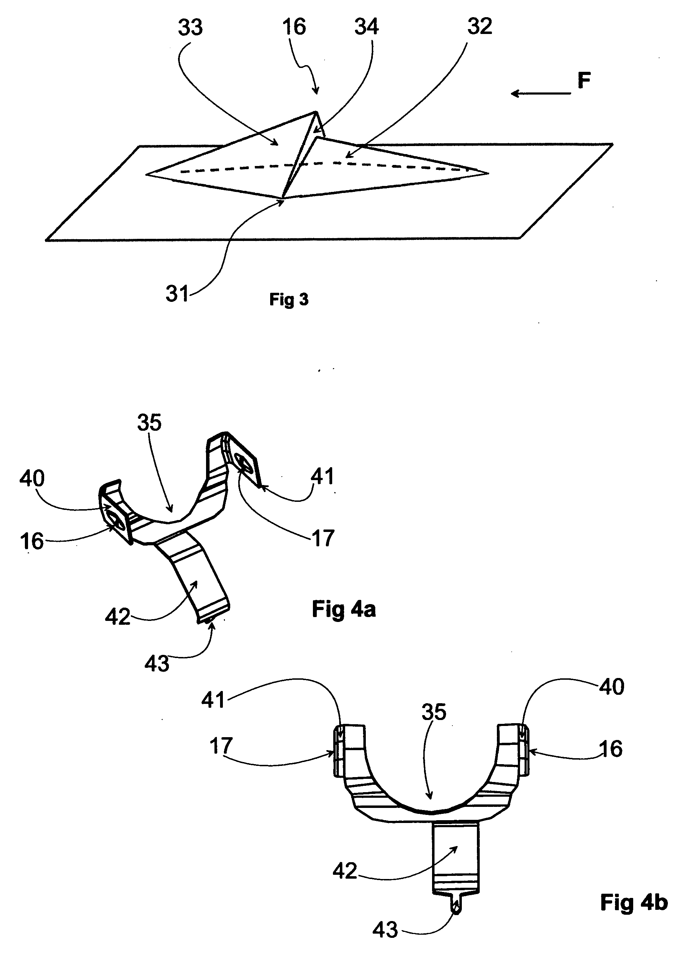

Le boîtier électronique 13 contient un circuit électronique 18. Par exemple, le circuit électronique 18 comporte un capteur (non représenté) de pression ou de température et un moyen d'émission (non représenté) en radiofréquences, de messages représentatifs de la pression et/ou la température captée par le capteur. Le circuit électronique est électriquement relié aux griffes 16 et 17 par des moyens dont un exemple est détaillé aux figures 4a et 4b.

La valve 10 est de type connu dans l'industrie automobile. Le filetage 12 sert à recevoir un écrou 20 (voir figure 2) pour le montage de la valve 10 sur une jante 21 de roue de véhicule (non représenté). Le filetage 12 sert aussi à porter un bouchon de protection (non représenté), généralement en matière plastique.

L'ouverture centrale 14 du boîtier électronique 13 est adapté à recevoir la valve 10 et à empêcher la rotation relative du boîtier électronique 13 autour de l'axe de rotation de la valve 10. Par exemple, si la tête 11 de la valve possède six pans, l'ouverture centrale 14 possède préférentiellement un même nombre de faces intérieures.

Le fond 15 de l'ouverture centrale 14 ne permet pas le passage de la tête 11 dans son ouverture. Le fond 15 permet ainsi le serrage du boîtier électronique 13 contre la jante 21, lorsque le boîtier électronique 13 et la valve 10 sont montés sur la jante. Dans la position de la figure 1, avant le montage de la valve 10 et du boîtier électronique 13 sur la jante 21, les griffes 16 et 17 dépassent des parois internes de l'ouverture centrale 14, vers son intérieur et font face en avant de la tête 11 de la valve 10, vers le fond 15. Lors du montage, la valve 10 est tirée vers le fond 15 (flèche F figure 2) par l'effet de la rotation de l'écrou 20 autour du filetage 12 et la tête 11 passe en force entre les griffes 16 et 17.

On observe, en figure 2 que le boîtier électronique 13 et la valve 10 sont montés sur la jante 21 par serrage de l'écrou 20 sur le filetage 12 en aval de la jante 21. Un joint 22 sépare le boîtier électronique 13 de la jante 21. La tête 11 de la valve 10 touche le fond 15 de l'ouverture centrale 14. La tête 11 de la valve 10 a été griffé ou pelé par les griffes 16 et 17 et un copeau de métal 23 s'est formé au lieu où la griffe, 16 ou 17, est en contact avec la valve 10. Dans des modes de réalisation particuliers (voir figures 3 et 4), dans chaque griffe est prévue une ouverture pour recueillir le copeau 23 formé par la griffure ou le pelage.

Du fait de l'arrachage de matière de la tête 11, le traitement de surface isolant de la tête 11 est arraché et un contact électrique s'opère entre chaque griffe et la valve 10 de telle manière que les signaux émis par le moyen d'émission du circuit électronique 18 sont véhiculés par la valve 10, qui sert d'antenne d'émission pour ces signaux.

On observe que la relation entre la valve 10 et le boîtier électronique 13 n'interdit pas un mouvement de faible amplitude autour d'un axe transversal A à l'axe de la valve 10 et passant par les points de contact de la tête 11 et de chacune des griffes 16 et 17.

On observe aussi que, l'ouverture centrale 14 constitue, pour les zones de contact entre la valve et les griffes, un carter qui prévient, au moins partiellement, une oxydation de ces zones de contact.

On observe, en figure 3, que, dans un mode de réalisation, une griffe, ici la griffe 16, présente une forme sensiblement pyramidale, dont la base 31 est en forme de losange dont la plus grande diagonale est orientée parallèlement au sens F de déplacement relatif de la tête 11 de la valve 10, lors du montage.

Du fait de la forme en losange de la base 31 (ou de tout autre forme allongée de même type par exemple une ellipse), la griffe 16 possède, selon une première section parallèle au sens de déplacement relatif de la valve, une première forme sensiblement triangulaire possédant une première base (la grande diagonale du losange) et, selon une deuxième section perpendiculaire à la première section, une deuxième forme sensiblement triangulaire présentant une deuxième base (la petite diagonale du losange) plus petite que ladite première base.

Plus précisément, la griffe 16 possède la forme de deux demi-pyramides 32 et 33, de hauteurs différentes et dont les bases sont les moitiés amont et avale du losange précité. La demi-pyramide 32, en amont par rapport au sens de déplacement de la tête 11 lors du montage, présente une hauteur inférieure à la demi-pyramide 33, en aval, de telle sorte que l'ouverture 34 (déchirure) créée entre les deux demi-pyramides se présente ouverte vers la tête 11 lors de sa progression. Au fur et à mesure que le copeau 23 se forme par l'effet de la griffure appliquée par la demi-pyramide 33, il rentre dans l'ouverture 34.

On observe que la griffe 16 peut être formée par simple emboutissage d'une feuille de métal destinée à constituer une pièce de raccordement électrique 35 (voir figures 4a et 4b) entre la valve 10 et le circuit électronique 18. Dans ce cas, lors de l'emboutissage, une déchirure (ouverture) 34 est créée entre les deux demi-pyramides. Cette ouverture receuille avantageusement tout copeau du à la griffure de la surface de la tête de valve 11.

Aux figures 4a et 4b, on observe que la pièce de raccordement 35 présente trois bras 40, 41 et 42, en étoile. Les bras 40 et 41 portent, respectivement, les griffes 16 et 17, et laissent un ouverture semi-circulaire libre, pour le passage de la tête 11 de la valve 10. Le bras 42 porte une broche 43 adaptée à être montée, par exemple soudée, sur le circuit électronique 18.

Dans des modes de réalisation particuliers, les griffes sont en acier inoxydable, ce qui les rend plus dures que le matériau de la valve, généralement en aluminium.

### Liste des références utilisées

- valve: 10
- tête (de valve): 11
- filetage (de valve): 12
- boîtier électronique: 13
- ouverture centrale: 14
- fond (d'ouverture centrale): 15
- griffes: 16 et 17
- circuit électronique: 18

- écrou: 20
- jante: 21
- joint: 22
- copeau de métal: 23

- base: 31
- demi-pyramide amont: 32
- demi-pyramide avale: 33
- ouverture (déchirure): 34
- pièce de raccordement: 35

- bras: 40, 41 et 42
- broche: 43

## Revendications

1. Dispositif de communication entre un véhicule et une de ses roues, comportant un boîtier (13) contenant un circuit électronique (18) et adapté à venir en appui sur une jante (21) de ladite roue lors du montage d'une valve (10) sur ladite jante, **caractérisé en ce que** ledit boîtier comporte au moins une griffe (16, 17) reliée électriquement audit circuit électronique et adaptée à griffer la surface de la valve lors du montage de la valve sur ladite jante.

2. Dispositif selon la revendication 1, **caractérisé en ce que** ledit boîtier (13) comporte un couple de griffes (16, 17) positionnées de part et d'autre de la valve (10) lors du montage de la valve (10) sur la jante (21).

3. Dispositif selon l'une quelconque des revendications 1 ou 2, **caractérisé en ce qu'**il est prévu une rotation relative de la valve (10) et du boîtier (13) et, à la fin du vissage de la valve, chaque griffe (16, 17) se trouve à proximité ou sur l'axe de rotation (A) de ladite rotation relative.

4. Dispositif selon l'une quelconque des revendications 1 à 3, **caractérisé en ce qu'**au moins une griffe (16, 17) est en acier inoxydable.

5. Dispositif selon l'une quelconque des revendications 1 à 4, **caractérisé en ce qu'**au moins une griffe (16, 17) possède une ouverture (34) adaptée à recueillir un copeau (23) résultant de la griffure de la valve par ladite griffe.

6. Dispositif selon l'une quelconque des revendications 1 à 5, **caractérisé en ce qu'**au moins une griffe (16, 17) présente une plus grande dimension parallèle au sens de déplacement relatif de la valve.

7. Dispositif selon l'une quelconque des revendications 1 à 6, **caractérisé en ce qu'**au moins une griffe (16, 17) possède une forme sensiblement pyramidale.

8. Dispositif selon l'une quelconque des revendications 1 à 7, **caractérisé en ce qu'**au moins une griffe (16, 17) est formée de deux demi pyramides (32, 33) à base triangulaires, de hauteurs différentes laissant une ouverture (34) entre elles.

9. Dispositif selon l'une quelconque des revendications 1 à 8, **caractérisé en ce qu'**au moins une griffe (16, 17) est formée par emboutissage, l'action d'emboutissage provoquant une déchirure (34) d'une partie de ladite griffe.

10. Dispositif selon l'une quelconque des revendications 1 à 9, **caractérisé en ce que** le boîtier (13) possède une forme adaptée à entourer, de manière sensiblement étanche à la circulation d'air, chaque griffe (16, 17).
